# EUROPEAN PATENT SPECIFICATION

(11) **EP 0 687 329 B1**
(45) Date of publication and mention of the grant of the patent: **28.08.1996**
(21) Application number: 94909336.3
(22) Date of filing: 04.03.1994
(51) Int. Cl.: E02B 3/16, A01K 63/00, B44C 5/06

(54) **FOIL**
FOLIE
FEUILLE

(30) Priority: 05.03.1993 NL 9300396
(43) Date of publication of application: 20.12.1995
(73) Proprietor: Schirris, Alphonsus Albertus, NL-1704 SE Heerhugowaard (NL)
(72) Inventor: Schirris, Alphonsus Albertus, NL-1704 SE Heerhugowaard (NL)
(74) Representative: Koomen, M.J.I.
(86) International application number: NL9400053
(87) International publication number: WO9420688

(56) References cited:
- EP-A- 0 358 908
- CA-A- 1 250 216
- DE-A- 3 815 762
- DE-A- 3 821 171
- GB-A- 1 602 400
- US-A- 3 930 088

## Description

The present invention relates to a sheet of plastic film intended for use with a pond or watercourse and such like, more in particular for use outside in parks and gardens.

Such a plastic film is very well known.

The known plastic film is generally used for the construction of for instance a natural pond in a garden, whereby for instance a PVC-film is placed into a dug out hole, after which the film is filled up with water and after which the edge of the film for the formation of the edge of the pond is placed over the ground that adjoins the edge of the pond. This edge can thereafter be covered with stones etc. in order to hide the plastic film from view.

It is further known to construct natural ponds by using a rigid form, for instance made of polyester, which form is placed into the hole that has been dug out for the pond. The edges of these ponds have been flanged and lie in one plane with the ground.

Usually plants and such-like are placed around the pond.

With these ponds it is generally felt as a drawback, that the plastic edges of the pond are very difficult to hide from view.
Although it is possible to cover the edges of a pond that has been made of a plastic film, or those of a polyester pond, with stones, these stones tend to shift at a given moment, after which in any case parts of the plastic edge of the pond become visible again, which detracts from the desired natural look of the pond.

Also the application of sand onto the edges is not satisfactory in the long run, as this sand, under the influence of rain, will wash away, after which the edge becomes visible again.

From DE-A-38 15 762 is known a plastic film provided with a covering layer with artificial or natural greenery such as moss, grass, rush, turf, cork etc, providing the upper layer with an appearance that resembles plants etc. . The covering layer also serves the purpose of facilitating the growth of plants such as rush, moss, grass etc in between the artificial or natural plants.

The invention aims to provide a plastic film, by means of which the plastic edge of a natural pond may be given a more aesthetical and for instance more natural look, by providing the area near or adjoining the edge of a pond with the appearance of a gravel or pebble beach.

The sheet of plastic film according to the invention thereto is characterized, in that onto one side thereof a layer of granular material of a stony nature is attached.

According to a further characteristic of the sheet of plastic film according to the invention, the layer of material is made up of crushed stone.

According to yet another characteristic of the sheet of plastic film according to the invention, the layer of material is made up of gravel or flint chips.

According to another characteristic of the sheet of plastic film according to the invention the sheet has the shape of a strip.

A strip of the plastic film according to the invention may be applied in a very simple manner to an already existing pond, by folding the foil over the edges. The original edge of the pond is thereby covered by the plastic film and thereby hidden from view. Only the plastic film according to the invention remains visible, whereby the layer of material that is attached to the foil provides an aesthetical view.

The use of the film according to the invention is not limited to the use for ponds and such. The film can also very well be used to cover any object in a garden, whereby it may be efficient to provide the film with perforations in order to make possible a ventilation that may possibly be required.

According to a further characteristic of the film according to the invention the layer of material is provided with a print. The layer of material may for instance be provided with a pattern of colours.

## Claims

1. Sheet of plastic film intended for use with a pond or watercourse and such like, characterized in that onto one side thereof a layer of granular material of a stony nature is attached.

2. Sheet of plastic film according to claim 1, characterized in that the layer of material is made up of crushed stone.

3. Sheet of plastic film according to claim 1, characterized in that the layer of material is made up of gravel or flint chips.

4. Sheet of plastic film according to one of the preceding claims, characterized in that the sheet has the shape of a strip.

5. Sheet of plastic film according to one of the preceding claims, characterized in that the layer of material has been provided with a print.

6. Sheet of plastic film according to one of the preceding claims, characterized in that the film is provided with perforations.

## Patentansprüche

1. Kunststoffolie zur Verwendung an einem Teich oder einem Wasserlauf und dgl., dadurch gekennzeichnet, daß auf deren einer Seite eine Lage eines körnigen steinartigen Materials angebracht ist.

2. Kunststoffolie gemäß Anspruch 1, dadurch gekenzeichnet, daß die Materiallage aus Schotter besteht.

3. Kunststoffalie gemäß Anspruch 1, dadurch gekennzeichnet, daß die Materiallage aus Kies oder Splitt besteht.

4. Kunststoffolie gemäß einem der vorhergehenden Ansprüche, dadurch gekennzeichnet, daß die Folie die Form eines Streifens hat.

5. Kunststoffolie gemäß einem der vorhergehenden Ansprüche, dadurch gekennzeichnet, daß die Material lage mit einem Farbauftrag versehen ist.

6. Kunststoffolie gemäß einem der vorhergehenden Ansprüche, dadurch gekenzeichnet, daß die Folie mit Perforationen versehen ist.

## Revendications

1. Feuille constituée par un film de matière plastique pour garnir une mare, un cours d'eau ou endroit analogue, caractérisée en ce qu'elle porte sur l'une de ses faces une couche de matière granuleuse de nature minérale qui est fixée à la feuille.

2. Feuille de matière plastique selon la revendication 1, caractérisée en ce que la couche de garniture est à base de pierre concassée.

3. Feuille de matière plastique selon la revendication 1, caractérisée en ce que la couche de garniture est à base de graviers ou d'éclats de silex.

4. Feuille de matière plastique selon l'une des revendications précédentes, caractérisée en ce que la feuille présente la forme d'une bande.

5. Feuille de matière plastique selon l'une des revendications précédentes, caractérisée en ce que la couche de garniture comporte des motifs imprimés.

6. Feuille de matière plastique selon l'une des revendications précédentes, caractérisée en ce qu'elle comporte des perforations.
